# EUROPEAN PATENT APPLICATION

(11) **EP 3 486 908 A1**
(43) Date of publication of application: **22.05.2019**
(21) Application number: 17306615.0
(22) Date of filing: 21.11.2017
(51) Int. Cl.: G11B 27/10, H04N 21/40

(54) **DYNAMIC AUDIO AND VIDEO ADJUSTMENT METHOD AND DEVICE**

(71) Applicant: THOMSON LICENSING, 92130 Issy les Moulineaux (FR)
(72) Inventor: SCHLATTER, Andre, 5200 Brugg (CH); KELLER, Tony, 8905 Arni (CH)
(74) Representative: Vidon Brevets & Stratégie

(57) **Abstract**

A method and device for dynamically adapting audio of a content stream. A content stream is analyzed to extract metadata. The metadata includes a plurality of audio parameters and/or video parameters related to the content stream. Audio and/or video for the content stream is dynamically adapted based on at least one of the plurality of extracted audio and/or video parameters and a plurality of stored audio and/or video parameters indicative of user preference.

## Description

### FIELD

The disclosure generally relates to audio and video content playout and reproduction and, more specifically, to dynamically and adaptively adjusting audio and video based on local and external characteristics and parameters.

### BACKGROUND

Conventional audio/video devices have numerous display modes, e.g. Standard, Music, Movie, Game, etc. that enhance the displayed picture and offer related audio parameters that are predefined or can be set statically by a user. These audio parameters offer adjustments for volume, surround, balance and some equalizer functions. By choosing from these display modes a user is able to adjust the general audio and video characteristics to their satisfaction. Unfortunately, these adjustments are fixed and not dynamically content or viewer related.

What is needed is a method and device for dynamic adaptive adjustment of audio and video levels and characteristics for content.

The present disclosure is directed towards overcoming these drawbacks.

### SUMMARY

According to a first aspect of the disclosure, a method is described for adapting audio for a content stream. The content stream is analyzed to extract metadata. The extracted metadata includes a plurality of audio parameters related to the content stream. Audio for the content stream is dynamically adapted based on at least one of the plurality of audio parameters extracted from the content stream and a plurality of stored audio parameters indicative of user preference.

In another embodiment, the extracted metadata further includes a plurality of video parameters related to the content stream. Video for the content stream is dynamically adapted based on at least one of the plurality of video parameters extracted from the content stream and a plurality of stored video parameters indicative of user preference.

In another embodiment, the audio and/or video is adapted during one of playing out and reproducing of the content stream.

In another embodiment, the adapted audio and/or video is synchronized with the content stream.

In another embodiment, the content stream is delayed prior to synchronization with the adapted audio and/or adapted video.

In another embodiment, characteristic markers of the content stream are compared to characteristic markers of the adapted audio and/or adapted video during synchronization of the content stream with the dynamically adapted audio and/or adapted video.

In another embodiment, data related to content in the content stream is received. Audio and/or video for the content stream is further adapted based on the received data.

According to a second aspect of the disclosure, a device is provided for adapting audio of a content stream. The device includes a processor, a memory and a circuit. The processor is configured to analyze the content stream and extract metadata from the content stream. The extracted metadata includes a plurality of audio parameters related to the content stream. The memory is configured to store a plurality of audio parameters indicative of user preferences. The circuit is configured to dynamically adapt the audio of the content stream based on at least one of the plurality of extracted audio parameters and the plurality of stored audio parameters indicative of user preference.

In another embodiment, the extracted metadata further includes a plurality of video parameters related to the content stream. Video for the content stream is dynamically adapted based on at least one of the plurality of video parameters extracted from the content stream and a plurality of stored video parameters indicative of user preference.

In another embodiment, the audio and/or video is adapted during one of playing out and reproducing of the content stream.

In another embodiment, the device further comprises a synchronizer configured to synchronize the adapted audio and/or video with the content stream.

In another embodiment, the content stream is delayed prior to synchronization with the adapted audio and/or adapted video.

In another embodiment, the synchronizer compares one or more characteristic markers of the content stream to one or more characteristic markers of the adapted audio and/or adapted video during synchronization of the content stream with the dynamically adapted audio and/or adapted video.

In another embodiment, data related to content in the content stream is received. Audio and/or video for the content stream is further adapted based on the received data.

In a third aspect of the disclosure, a system is described including a device configured to adapt audio and/or video of a content stream and a rendering device configured to render the adapted audio and/or video of the content stream.

Some processes implemented by elements of the disclosure may be computer implemented. Accordingly, such elements may take the form of an entirely hardware embodiment, an entirely software embodiment (including firmware, resident software, microcode, etc.) or an embodiment combining software and hardware aspects that may all generally be referred to herein as "circuit", "module" or system. Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as, an electrical signal, an optical signal, an acoustic signal, a magnetic signal or an electromagnetic signal, e.g., a microwave or RF signal.

### BRIEF DESCRIPTION OF THE DRAWINGS

These and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 is an exemplary block diagram of an audio/video processing device in accordance with an embodiment of the disclosure;
FIG. 2 is a flow chart of an exemplary method in accordance with one embodiment of the disclosure;
FIG. 3 is flow chart of an exemplary method in accordance with another embodiment of the disclosure;
FIG. 4 is an illustration depicting an audio signal adaptation in accordance with one embodiment of the disclosure; and
FIGS. 5a-5e are graphical illustrations depicting characteristics of audio and/or video signals in accordance with embodiments of the disclosure.

It should be understood that the drawings are for purposes of illustrating the concepts of the disclosure and are not necessarily the only possible configuration for illustrating the disclosure.

### DETAILED DESCRIPTION

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to, or indirectly connected with, through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

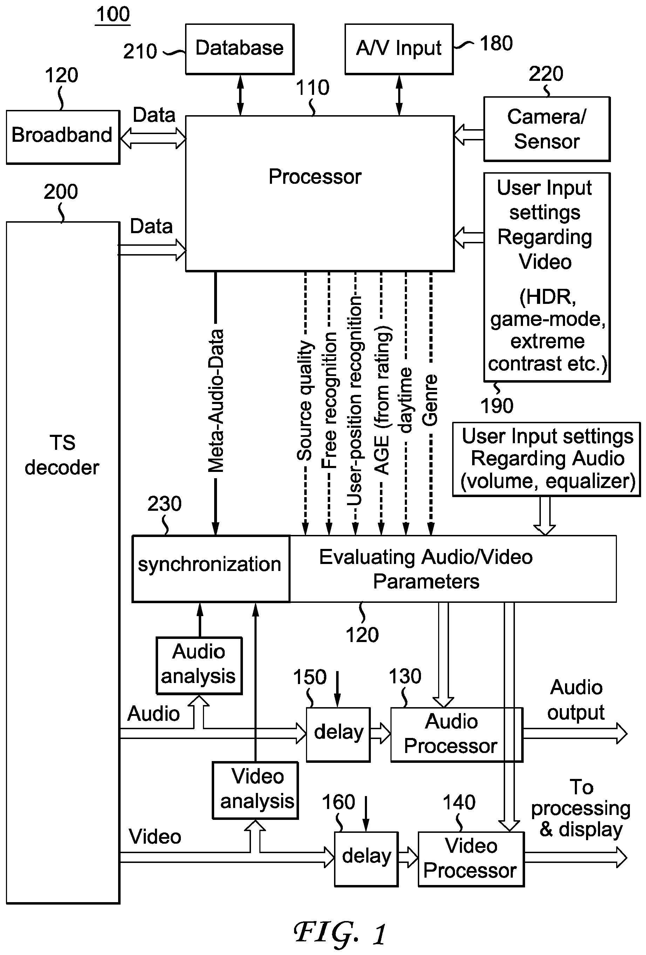

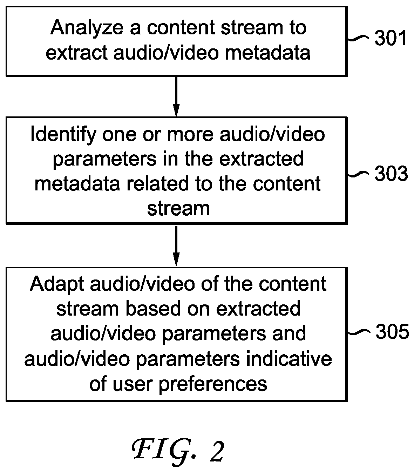

The steps of the embodiment of the method and the device according to the invention will now be described with reference to FIGS. 1 and 2. The device can be a stand-alone device or part of an electronic consumer device as, for instance, a TV set, a cell phone, a tablet, a set-top-box, a gateway, a camera, etc.

The present arrangement provides a method and device for automatically, dynamically and individually adjusting levels and characteristics of audio and video content being reproduced or played out based on local and external parameters. The method and device enable dynamic enhancement of content while the content is being played. The dynamic enhancement of the content is based on certain characteristics and parameters which may be extracted from the content, related to viewers of the content, related to conditions surrounding the viewing of the content or the genre of the content.

Modern audio/video devices enable users to manually adjust audio and video characteristics. Audio characteristics that can be manually adjusted include volume, surround, balance, equalizer functions, etc. Video characteristics that can be manually adjusted include brightness, contrast, sharpness, resolution, saturation, backlighting, etc. Conventionally, these characteristics can be adjusted by activating a button on a remote control or the device or using user interface displays. Should the user desire to change these characteristics while the audio/video content is being played out or reproduced, the user must manually activate the buttons on the remote control or activate the user interface.

The disclosure provides for automatic and dynamic enhancement of audio and video while the content is being played back or reproduced. The automatic and dynamic adjustment of the content provides enhanced audio and video to better match content, preferences of a user, ability of the display device, and to modify the dramaturgy of the content.

Depicted in Figure 1 is a block diagram of an exemplary device 100. The device 100 includes a processor 110, an evaluation circuit 120, an audio processor 130, a video processor 140, an audio delay 150, a video delay 160, a broadband connection port 170, an audio/video input port 180, a user input port 190, a Transport Stream (TS) decoder 200 and a database/memory 210. The device 100 may also have sensors and a camera 220 for detecting any viewers within a certain range of the device for viewing the content and to identify any of the detected viewers. The audio/video input port 180 receives audio/video content from devices such as a camera, VCR, DVD, set top box, etc. The user input port 190 receives input such as mode selection for the device. The broadband connection port 170 connects the device to the internet for receiving streaming content and content information in response to a request. The database/memory 210 stores data related to content played by the device, profile data for viewers of the device and software programs to be executed by the processor 110.

The processor 110 receives audio/video content through at least one of the audio/video input port 180 and broadband connection port 170. The audio/video content is decoded by the TS decoder 200 and provided to the processor 110 where the decoded content is processed. The processor 110 extracts metadata from the decoded content. Metadata extracted from the content may include data representative of a genre of the content, rating for the content, source quality for the content, etc. For example, in a Digital Video Broadcast (DVB), data such as the genre can generally be extracted from the Event Information Table (EIT), the age rating of the content can generally be extracted from the DVB parental rating descriptor and the source quality can be evaluated by the audio format, quality analysis or bit-error-rate (BER). If certain information is not included in the metadata of the decoded content signal, the processor 110 may request information from the internet via the broadband connection port 170 by accessing certain databases, e.g. IMDB.com, Gracenote.com, etc. The processor 110 may provide this data as well as other information such as a time of day when the content is being played out or reproduced, information on viewers watching the content such as facial recognition and age of viewers and information on a position of the viewers with respect to the display to the evaluation circuit 120. Audio and video levels of the content are evaluated by the evaluation circuit 120 as the content is being played and are dynamically and adaptively adjusted based on the data provided by the processor 110 to generate dynamically adapted audio and video signals. The dynamically adapted audio and video signals adjust the content for either more or less dramaturgy based on the data provided by the processor 110.

The dynamically adapted audio signal is provided to the audio processor 130 and the dynamically adapted video signal is provided to the video processor 140. The TS decoder 200 provides the decoded audio signal to the audio processor 130 via an audio delay 150 and the decoded video signal to the video processor 140 via a video delay 160. The audio delay 150 and the video delay 160 delay the audio and video content by a period so as to account for the processing time necessary for the evaluation circuit 120 to evaluate the audio and video of the content and generate enhanced audio and enhanced video signals. The delay of the content maintains the content in synchronization with the enhanced audio and video signals. The decoded audio signal and decoded video signal are also provided to a synchronization circuit 230, which may be within the evaluation circuit 120, to detect characteristic markers within the audio and video signals. The markers are compared with markers within the dynamically adapted audio and video signals in order to synchronize the markers and thus synchronize the signals. The evaluation circuit 120 processes the content and the data received from the processor to generate enhanced audio and video signals. The enhanced audio signal and the delayed audio signal are combined and synchronized within the audio processor 130 to adjust the dramaturgy of the audio signal and generate the dynamically adapted audio signal. The dynamically adapted audio signal is provided to the audio output. The enhanced video signal and the delayed video signal are combined within the video processor 140 to adjust the dramaturgy of the video signal and generate the dynamically adapted video signal. The dynamically adapted video signal is provided to the video output. Matching the markers within the content and the enhanced audio and video signals provides for more accurate synchronization than that obtained by delaying the audio and video signals in their respective delays.

The dynamically adapted audio and video signals have increased or decreased dramaturgy based on the characteristics and parameters provided to the evaluation circuit 120. The characteristics and parameters used by the evaluation circuit 120 adjust audio and video levels based on the time of day the content is being viewed, the number of viewers for the content, characteristics of each viewer, such as age and tendencies, the position of the viewer with respect to the display of the content, genre of the content, quality of the content, etc. With respect to the audio signal, the dynamically adapted audio signal may adjust the volume, the base or treble, the fade or balance, equalization properties, etc. as the content is being played based on the parameters and characteristics considered. With respect to the video signal, the dynamically adapted video signal may adjust the brightness, contrast, sharpness, resolution, saturation, backlighting, etc. as the content is being played based on the parameters and characteristics considered. Additionally, it should be understood that the elements set forth in Figure 1 are illustrative. The system 100 can include any number of elements and certain elements can provide part or all of the functionality of other elements. Other possible implementations will be apparent to one skilled in the art given the benefit of the present disclosure. Additionally, the characteristics and parameters provided to and used by the evaluation circuit 120 to generate the enhanced audio and video signals discussed above are exemplary and not limiting. Other characteristics and parameters of the content, environment and possible viewers of the content may also be used to generate the enhanced audio and video signals.

Figure 2 illustrates a flow chart describing the method of dynamically adjusting audio and video parameters in one embodiment of the disclosure. In step 301, a content stream is analyzed by the evaluation circuit 120 (FIG. 1) to extract audio metadata indicative of the content stream. Metadata extracted from the content may include data representative of a genre of the content, rating for the content, source quality for the content, etc. The evaluation circuit 120, in step 303, identifies one or more audio parameters in the extracted audio metadata that are related to the content stream. In step 305, the evaluation circuit 120 dynamically adapts the audio of the content stream based on the extracted audio parameters and audio parameters stored in a database/memory 210 and provided to the evaluation circuit 120 by the processor 110.

Referring to Figure 2, the content stream may also be analyzed by the evaluation circuit 120 to extract video metadata indicative of the content stream, as indicated in step 301. The evaluation circuit 120, in step 303, may also identify one or more video parameters in the extracted audio metadata that are related to the content stream. In step 305, the evaluation circuit 120 may also dynamically adapt the video of the content stream based on the extracted video parameters and video parameters stored in a database/memory 210 and provided to the evaluation circuit 120 by the processor 110.

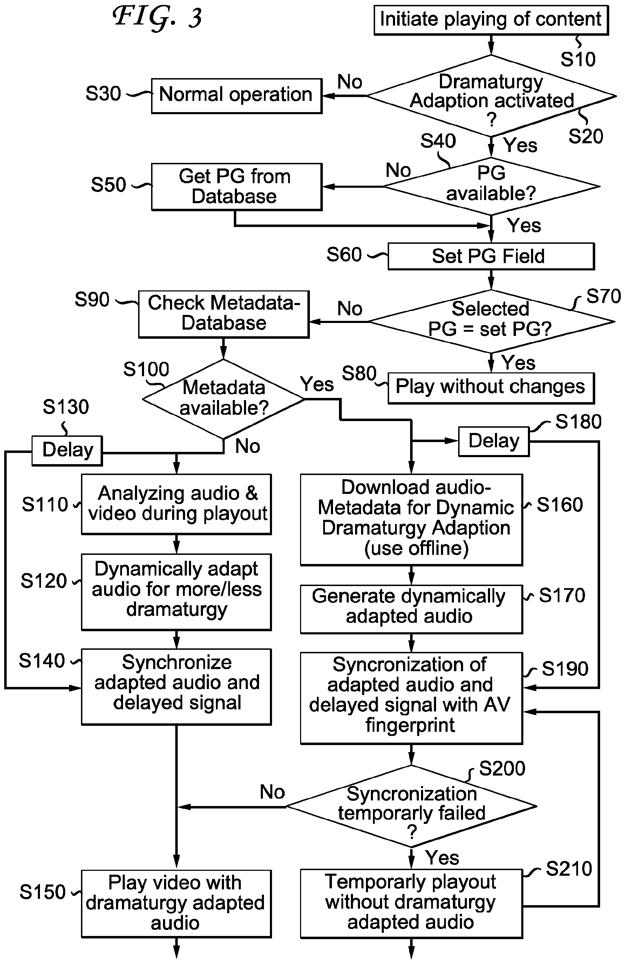

Figure 3 illustrates a flow chart describing the method of dynamically adaptively adjusting audio and video levels in another embodiment of the disclosure. The method is described based on an initial confirmation regarding whether Parental Guidance (PG) information related to the content matches a preset parental guidance for a viewer of the content. However, the use of the PG information is for purposes of example only and any characteristic or parameter may be used to determine whether to dynamically adaptively adjust the audio and video signals or to play out or reproduce the content without any changes. Playing of the content is initiated in step S10. Once playing of the content is initiated, it is determined if dramaturgy adaption is activated in step S20. If dramaturgy adaption is not activated, normal playback of the content is continued in step S30. If dramaturgy adaption is activated, it is determined if Parental Guidance (PG) information for the content is available from metadata provided with the content in step S40. If PG information for the content is not available, the database 210 is searched for the information or the PG information is obtained from the internet via the broadband connection port in step S50. If the PG information is available from the metadata or obtained from a database or the internet, a PG field is set for the content and provided to the evaluation circuit in step S60. In step S70 it is determined whether a PG selected by or related to a viewer of the content is the same as the set PG for the content. If the selected PG is equal to the preset PG for the content, the content is played without changes to audio and video levels in step S80. If the selected PG is not equal to the preset PG for the content, the database is checked for metadata related to the content, local parameters and characteristics, and profile data for viewers of the content in step S90.

In step S100 it is determined whether metadata is available in the database. If it is determined metadata is not available, the audio and video of the content is analyzed during playout in step S110. In step S120 the levels of the audio and video signals are adapted for more or less dramaturgy based on the selected PG and preset PG. When it is determined that metadata is not available in step S100, the content signal is also provided to a delay in step S130. In step S140, the dynamically adapted audio and video signals are synchronized with the delayed audio and video signals. The synchronized signal including the dramaturgy adapted audio and video is played in step S150.

If it is determined in step S100 that metadata is available in the database, the metadata is downloaded by the evaluation circuit in step S160. In step S170 the levels of the audio and video signals are adapted for more or less dramaturgy based on the selected PG and preset PG as well as on the downloaded metadata. When it is determined that metadata is available in step S100, the content signal is also provided to a delay in step S180. In step S190, the dynamically adapted audio and video signals are synchronized with the delayed audio and video signals. It is then determined whether synchronization of the dynamically adapted audio and video signals and the delayed audio and video signals failed in step S200. If synchronization is determined to have failed, the content is played temporarily without dramaturgy adapted audio and video in step S210 and synchronization is reattempted in Step 190. If it is determined synchronization did not fail, the synchronized signal including the dramaturgy adapted audio and video is played in step S150.

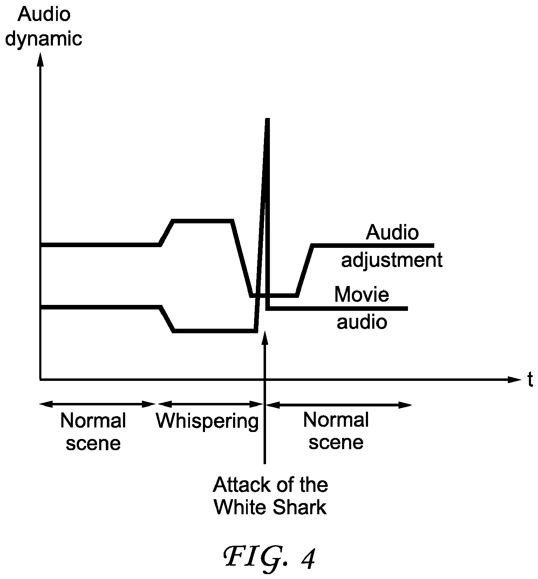

Figure 4 shows a graphical depiction of a dynamic hardening and softening of the dramaturgy of an audio single during playing out or reproduction of the content. As can be seen from this figure, during certain scenes the audio and video levels of the played content may be dynamically adapted to soften the dramaturgy while during other scenes or based on different dramaturgy parameters and characteristics, the audio and video levels of the played content may be dynamically adapted to increase the dramaturgy. The depiction of audio signals in this figure is based on dynamically adapting the audio signal for a viewer who is a child of an age less than the age preset as the PG information of the content. In figure 4, the X-axis represents time and the Y-axis represents the audio dynamic of the content. As the exemplary content shown in Figure 4 is played back, the audio begins at a normal level and the audio adjustment raises the audio level, i.e. hardens the dramaturgy, a certain amount. After a period of time, the audio represents a scene in which there is whispering and the level of audio for the content is decreased. The audio adjustment is shown providing an additional gain in dramaturgy above that provided during the normal audio so that the audio can be more clearly heard by a viewer. The whispering scene leads up to a tense scene identified in Figure 4 as a shark attack. At the point of the shark attack, the audio dynamic of the content has a rapid rise. Based on the dramaturgy parameters and characteristics being evaluated by the evaluation circuit, the device softens the audio dramaturgy. The softening of the audio dramaturgy minimizes the stress associated with the dramatic rise in the audio dynamic caused by the suspenseful scene of the shark attack. After the suspense of the scene has ended, the audio dynamic is adjusted to the levels for a normal scene.

The dramaturgy may show gains or be softened based on certain characteristics of the viewer, such as their age. For children, the audio dramaturgy may be softened during suspenseful scenes as shown in Figure 4. The softening of the dramaturgy helps protect children from audio excesses during such scenes. While during other scenes or for an older viewer, based on the evaluated characteristics and properties, the device may determine the content will benefit from a gain in dramaturgy.

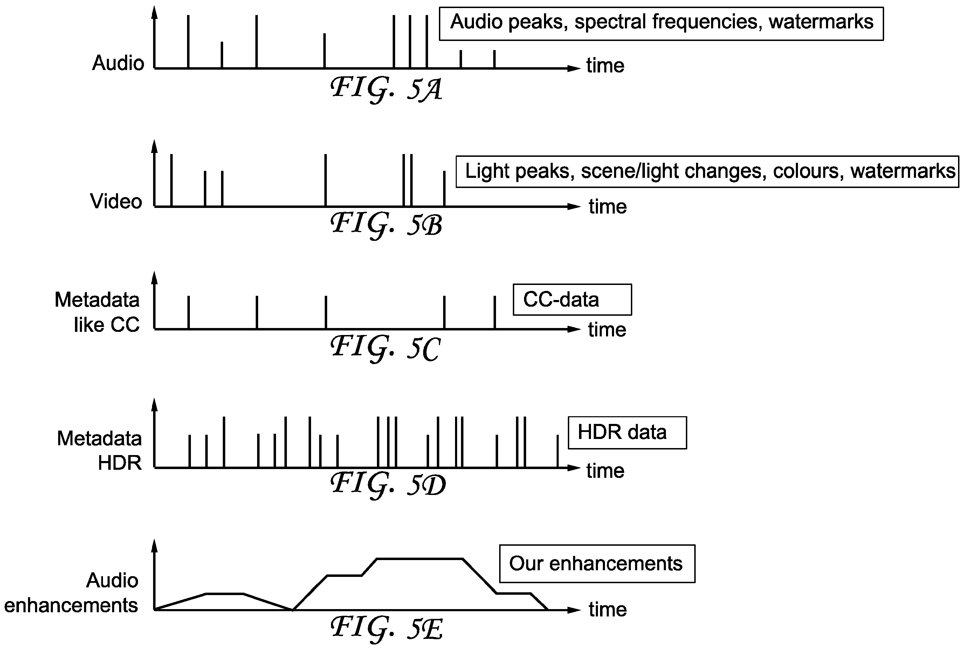

Figures 5a-5e illustrate graphs of different parts of content and characteristics of these parts that can be used for marking/fingerprinting the content and used in synchronization. Playing of the content and enhancing dramaturgy during playing out or reproducing the content by the device requires synchronization of the enhanced signal with the content. Synchronization can be performed using markers/fingerprints of different parts of the content. A marker/fingerprint of the content has to be created and saved together with metadata in an enhancement file. When the content is being played, the marker/fingerprint information needs to be extracted from the content. Figures 5a-5e show exemplary marker/fingerprint graphs for audio, video, metadata such as closed caption (CC) information, and metadata HDR of content to be played. This information is extracted from the content being played out and synchronized with the marker/fingerprint and metadata of the enhanced audio and video signals. The matching of the markers/fingerprints of the played out content and the enhanced audio and video signals provides enhanced synchronization of the audio and video of the content stream.

Although embodiments which incorporate the teachings of the present disclosure have been shown and described in detail herein, those skilled in the art can readily devise many other varied embodiments that still incorporate these teachings. Having described preferred embodiments of a system and method for enhancing content (which are intended to be illustrative and not limiting), it is noted that modifications and variations can be made by persons skilled in the art in light of the above teachings. It is therefore to be understood that changes may be made in the particular embodiments of the disclosure disclosed which are within the scope of the disclosure as outlined by the appended claims.

## Claims

1. A method, comprising:
analyzing (301) a content stream to extract metadata, the metadata including a plurality of first audio parameters (303) related to the content stream; and
adapting (305) audio for the content stream based on at least one of the plurality of first audio parameters and a plurality of second audio parameters indicative of user preference.

2. The method according to claim 1, wherein the metadata further includes a plurality of first video parameters related to the content stream; and
adapting video for the content stream based on at least one of the plurality of first video parameters and a plurality of second video parameters indicative of user preference.

3. The method of claim 1 or 2, wherein the audio and/or the video is adapted during one of playing out and reproducing of the content stream.

4. The method of any one of the preceding claims, further comprising synchronizing the adapted audio and/or the adapted video with the content stream.

5. The method according to claim 4, wherein the content stream is delayed prior to synchronizing with the adapted audio and/or the adapted video.

6. The method according to claims 4 or 5, wherein one or more marker of the content stream is compared to one or more marker of the adapted audio and/or adapted video during synchronization.

7. A device (100), comprising:
a processor (110), configured to analyze a content stream and extract metadata from the content stream, the metadata including a plurality of first audio parameters;
a memory (210), configured to store a plurality of second audio parameters indicative of user preferences; and
a circuit (120), configured to adapt audio of the content stream based on at least one of the plurality of first audio parameters and the plurality of second audio parameters.

8. The device according to claim 7, wherein the metadata further includes a plurality of first video parameters related to the content stream and the circuit further adapts video for the content stream based on at least one of the plurality of first video parameters and a plurality of second video parameters indicative of user preference.

9. The device of claim 7 or 8, wherein adapting the audio and/or video of the content stream occurs during one of playing out and reproducing of the content stream.

10. The device according to any one of claims 7 to 9, further comprising a synchronizer configured to synchronize the adapted audio and/or adapted video with the content stream.

11. The device according to claim 10, wherein the content stream is delayed prior to synchronization with the adapted audio and/or adapted video.

12. The device according to claims 10 or 11, wherein the synchronizer further compares or more marker of the content stream to one or more marker of the adapted audio and/or adapted video during synchronization.

13. A system, comprising:
a device configured to adapt audio and/or video of a content stream according to any one of claims 7-12; and
a rendering device configured to render the adapted audio and/or video of the content stream.

14. A computer program product for a programmable apparatus, the computer program product comprising a sequence of instructions for implementing a method according to any one of claims 1-6, when loaded into and executed by the programmable apparatus.
